# FASCICULE DE BREVET EUROPEEN

(11) **EP 0 870 636 B1**
(45) Date de publication et mention de la délivrance du brevet: **13.02.2002**
(21) Numéro de dépôt: 97201040.9
(22) Date de dépôt: 07.04.1997
(51) Int. Cl.: B60J 1/14, E06B 3/66, E06B 3/38

(54) **Fenêtre basculante pour habitation mobile**
Klappfenster für fahrbares Haus
Tiltable window for mobile home

(43) Date de publication de la demande: 14.10.1998
(73) Titulaire: PARA-PRESS S.A., L-3201 Bettembourg (LU)
(72) Inventeur: Resibois, Raymond, 6750 Signeulx (BE)
(74) Mandataire: Meyers, Ernest

(56) Documents cités:
- EP-A- 0 275 154
- DE-A- 4 007 365
- GB-A- 2 088 459
- NL-A- 9 300 377

## Description

La présente invention concerne une fenêtre basculante pour habitation mobile comprenant une vitre extérieure et au moins une vitre intérieure qui sont collées ou soudées ensemble par une zone périphérique et dont l'une au moins est thermoformée, ladite fenêtre étant suspendue par une charnière au bord supérieur d'une baie de l'habitation, la charnière étant constituée d'un profilé fixe attaché à la paroi de l'habitation et d'un profilé pivotant fixé au bord supérieur de la fenêtre.

Le profilé pivotant de la charnière est toujours fixé au bord de la vitre extérieure ou au bord commun collé des deux vitres comme dans le document EP 0 602 755. La charnière est donc toujours visible, ce qui peut dégrader l'aspect esthétique global de la fenêtre.

Le but de la présente invention est de prévoir une nouvelle fenêtre basculante pour habitation mobile dont la charnière autour de laquelle elle pivote n'est pas visible de l'extérieur.

Pour atteindre cet objectif, l'invention propose une fenêtre du genre décrit dans le préambule qui est caractérisée en ce que les vitres comportent des bords supérieurs qui s'étendent au-delà de la zone de soudure ou de collage à distance l'un de l'autre, en ce que le profilé pivotant est fixé sur le bord d'une vitre intérieure et en ce que le bord de la vitre extérieure dépasse les deux profilés constituant la charnière.

La charnière est ainsi masquée complètement par la vitre extérieure. Toute la périphérie de celle-ci peut être tout-à-fait libre, ce qui confère à la fenêtre un aspect parfaitement net et harmonieux. Étant donné que la charnière n'est pas visible de l'extérieur, elle ne dégrade pas l'aspect global de la fenêtre. Elle peut notamment avoir une couleur différente de celle du bord de la fenêtre ou être d'une qualité visuelle inférieure.

Le résultat est particulièrement intéressant et avantageux lorsque la vitre extérieure comporte, comme c'est souvent le cas, un bord périphérique opaque destiné à masquer la zone de collage ou de soudure.

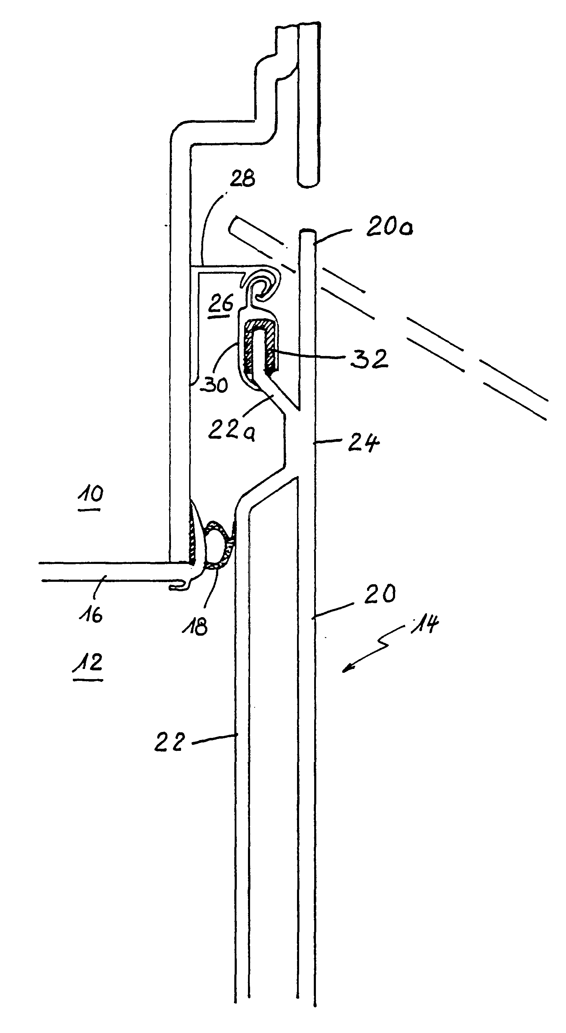

D'autres particularités et avantages ressortiront de la description d'un mode de réalisation avantageux présenté ci-dessous, à titre d'illustration, en référence à la figure unique qui montre une vue partielle d'une coupe verticale à travers une fenêtre selon la présente invention.

La référence 10 désigne une partie d'une paroi d'une habitation mobile, par exemple d'une caravane, entourant une baie 12 d'une fenêtre 14. La baie 12 est entourée d'un cadre 16 avec un joint d'étanchéité 18, par exemple en caoutchouc, sur lequel la fenêtre prend appui en position fermée.

La fenêtre 14 est du type basculant et peut être pivotée entre la position fermée représentée en traits pleins et une position ouverte montrée en traits interrompus dans laquelle elle peut être maintenue à l'aide de béquilles non représentées.

La fenêtre 14 est du type à double vitrage et comporte une vitre extérieure plate 20 et une vitre intérieure thermoformée en forme d'assiette. Les deux vitres 20 et 22 sont réunies par une zone périphérique 24 de soudure ou de collage étanche. Conformément à la présente invention, les deux vitres 20 et 22 comportent, du côté supérieur, des bords libres 20a, respectivement 22a, espacés l'un de l'autre et s'étendant sur une certaine distance au-delà de la zone de soudure ou de collage 24, le bord 20a de la vitre extérieure 20 étant plus large que le bord 22a de la vitre intérieure 22.

La fenêtre est suspendue de manière pivotante à une charnière 26. Cette charnière 26 est constituée d'un profilé fixe 28 attaché, par exemple à l'aide de vis, à la paroi 10 de l'habitation et d'un profilé pivotant 30 fixé à la fenêtre 14, par exemple au moyen d'un caoutchouc de serrage 32. La liaison entre les deux profilés 28 et 30 est réalisée de manière connue en soi par deux rainures ouvertes de section arrondie, la rainure du profilé pivotant 30 pouvant être engagée par le côté latéral et par glissement dans la rainure du profilé fixe 28.

Conformément à la présente invention, le profilé pivotant est fixé, non pas à la vitre extérieure comme c'est le cas des fenêtres connues, mais au bord supérieur 22a de la vitre intérieure 22. Le bord 20a de la vitre extérieure 20 s'étend jusqu'au dessus de la charnière 26, si bien que cette dernière est complètement masquée par le bord de la vitre extérieure 20, surtout si celle-ci comporte, comme c'est souvent le cas, un bord périphérique opaque.

Le profilé fixe s'étend à une certaine distance de la paroi 10 pour permettre l'ouverture de la fenêtre sans que le bord 20a vienne buter sur la paroi 10.

Dans l'exemple représenté sur la figure, c'est la vitre extérieure qui est plate. Il est bien entendu également possible que ce soit la vitre intérieure qui soit plate et que la vitre extérieure soit une vitre thermoformée. Il est également possible que les deux vitres soient thermoformées.

La fenêtre sur la figure a été montrée, à titre d'exemple, comme étant une fenêtre à double vitrage. L'invention s'applique toutefois aussi bien aux fenêtres à triple vitrage. Dans ce cas, le profilé pivotant de la charnière peut être fixé, soit sur la vitre intérieure, soit sur la vitre du milieu.

## Revendications

1. Fenêtre basculante pour habitation mobile comprenant une vitre extérieure (20) et au moins une vitre intérieure (22) qui sont collées ou soudées ensemble par une zone périphérique (24) et dont l'une au moins est thermoformée, ladite fenêtre étant suspendue par une charnière (26) au bord supérieur d'une baie (12) de l'habitation, la charnière (26) étant constituée d'un profilé fixe (28) attaché à la paroi de l'habitation et d'un profilé pivotant (30) fixé au bord supérieur de la fenêtre, **caractérisée en ce que** les vitres (20, 22) comportent des bords supérieurs (20a, 22a) qui s'étendent au-delà de la zone (24) de soudure ou de collage, à distance l'un de l'autre, **en ce que** le profilé pivotant (30) est fixé sur le bord (22a) d'une vitre intérieure (22) et **en ce que** le bord (20a) de la vitre extérieure (20) dépasse les deux profilés (28, 30) constituant la charnière (26).

2. Fenêtre selon la revendication 1 **caractérisée en ce que** la vitre extérieure (20) comporte un bord périphérique opaque.

## Claims

1. Pivot-hung window for a mobile home, comprising an outer pane (20) and at least one inner pane (22) which are bonded or welded together around a peripheral zone (24) and at least one of which is thermally formed, the said window being hung by a hinge (26) from the upper edge of an opening (12) of the home, the hinge (26) consisting of a fixed section piece (28) attached to the wall of the home and of a pivoting section piece (30) fixed to the upper edge of the window, **characterized in that** the panes (20, 22) comprise upper edges (20a, 22a) which extend beyond the welded or bonded zone (24), away from one another, **in that** the pivoting section piece (30) is fixed to the edge (22a) of an inner pane (22) and **in that** the edge (20a) of the outer pane (20) protrudes beyond the two section pieces (28, 30) which make up the hinge (26).

2. Window according to Claim 1, **characterized in that** the outer pane (20) has an opaque peripheral edge.

## Patentansprüche

1. Ausstellfenster für Wohnwagen mit einer Aussenscheibe (20) und wenigstens einer Innenscheibe (22) welche entlang einem Aussenbereich (24) miteinander verklebt oder verschweisst sind und wobei mindestens eine der beiden thermoplastisch geformt ist, wobei das Fenster mit einem Scharnier (26) am oberen Rand einer Wohnwagenöffnung (12) aufgehängt ist, wobei das Scharnier (26) aus einem an der Wohnwagenwand befestigten festen Profil (28) und aus einem am oberen Fensterrand befestigten schwenkbaren Profil (30) besteht, **dadurch gekennzeichnet, dass** die Scheiben (20, 22) obere Ränder (20a, 22a) aufweisen welche sich bis jenseits des Schweiss- oder Klebebereichs (24) voneinander getrennt erstrecken, dass das schwenkbare Profil (30) am Rand (22a) der Innenscheibe (22) befestigt ist und dass der Rand (20a) der Aussenscheibe (20) die beiden das Scharnier (26) bildende Profile (28, 30) überragt.

2. Fenster nach Anspruch 1, **dadurch gekennzeichnet, dass** die Aussenscheibe (20) einen undurchsichtigen äusseren Rand umfasst.
